Europäisches Patentamt

European Patent Office

Office européen des brevets

(11) Veröffentlichungsnummer: **0 450 424 A1**

## (12) EUROPÄISCHE PATENTANMELDUNG

(21) Anmeldenummer: 91104509.4

(22) Anmeldetag: 22.03.91

(51) Int. Cl.5: **B29C 65/20**

(30) Priorität: 02.04.90 DE 4010541

(43) Veröffentlichungstag der Anmeldung:
09.10.91 Patentblatt 91/41

(84) Benannte Vertragsstaaten:
AT BE CH DE DK ES FR GB GR IT LI LU NL SE

(71) Anmelder: Dommer, Armin
Eichweg 13
W-7257 Ditzingen 1(DE)

Anmelder: Dommer, Dieter
Bahnhofstrasse 5
W-7257 Ditzingen 1(DE)

(72) Erfinder: Dommer, Armin
Eichweg 13
W-7257 Ditzingen 1(DE)
Erfinder: Dommer, Dieter
Bahnhofstrasse 5
W-7257 Ditzingen 1(DE)

(74) Vertreter: Vogel, Georg
Pat.-Ing. Georg Vogel
Hermann-Essig-Strasse 35
W-7141 Schwieberdingen(DE)

(54) Vorrichtung zum Einschweissen eines Kunststoff-Rohrabschnittes in ein Kunststoff-Formstück.

(57) Die Erfindung betrifft eine Vorrichtung zum Einschweißen eines Kunststoff-Rohrabschnittes in ein Kunststoff-Formstück nach dem Heizelementverfahren, bei der zwei mit Spannelementen versehene Schlitten (15,18) auf einem Grundgestell (10) angeordnet und mittels einer Stelleinrichtung gegeneinander verstellbar sind und bei der mittels an dem Grundgestell schwenkbar gelagerter Schwenkhebel (21,22) eine Heizeinrichtung (30) zwischen die beiden Spannelemente mit dem eingespannten Kunststoff-Rohrabschnitt und dem eingespannten Kunststoff-Formstück ein- und ausschwenkbar ist, wobei die Heizeinrichtung ein Heizelement mit einem topfartigen Abschnitt zum Aufstülpen auf den Kunststoff-Rohrabschnitt und einen zylinderförmigen Abschnitt zum Einführen in das Kunststoff-Formstück aufweist. Eine universelle rüstzeitfreie Verwendung der Vorrichtung für verschiedene Rohrdurchmesser wird dadurch erreicht, daß die Heizeinrichtung mehrere unterschiedliche Heizelemente (31,32,33) mit jeweils einem topfartigen und einem zylinderförmigen Abschnitt aufweist und daß die Heizeinrichtung selbst an den Schwenkhebeln so drehbar gelagert ist, daß bei eingeschwenkter Heizeinrichtung die Heizelemente wahlweise zwischen die beiden Spannelemente mit dem eingespannten Kunststoff-Rohrabschnitt und dem eingespannten Kunststoff-Formstück eindrehbar sind.

FIG.2

EP 0 450 424 A1

Rank Xerox (UK) Business Services

Die Erfindung betrifft eine Vorrichtung zum Einschweißen eines Kunststoff-Rohrabschnittes in ein Kunststoff-Formstück nach dem Heizelementverfahren, bei der zwei mit Spannelementen versehene Schlitten auf einem Grundgestell angeordnet und mittels einer Stelleinrichtung gegeneinander verstellbar sind und bei der mittels an dem Grundgestell schwenkbar gelagerter Schwenkhebel eine Heizeinrichtung zwischen die beiden Spannelemente mit dem eingespannten Kunststoff-Rohrabschnitt und dem eingespannten Kunststoff-Formstück ein- und ausschwenkbar ist, wobei die Heizeinrichtung ein Heizelement mit einem topfartigen Abschnitt zum Aufstülpen auf den Kunststoff-Rohrabschnitt und einen zylinderförmigen Abschnitt zum Einführen in das Kunststoff-Formstück aufweist.

Eine Vorrichtung dieser Art ist durch die DE-PS 27 34 911 bekannt. Bei eingeschwenkter Heizeinrichtung werden die Spannelemente mit dem eingespannten Kunststoff-Rohrabschnitt und dem eingespannten Kunststoff-Formstück in Richtung zum Heizelement verstellt. Dabei wird der topfartige Abschnitt auf den Kunststoff-Rohrabschnitt aufgestülpt, so daß die Außenseite des Kunststoff-Rohrabschnittes erwärmt und plastifiziert wird. Außerdem wird der zylinderförmige Abschnitt in die Innenaufnahme des Kunststoff-Formstückes eingeführt, so daß die Innenwandung desselben erwärmt und plastifiziert wird. Ist die Plastifizierung weit genug fortgeschritten, werden die Heizeinrichtung ausgeschwenkt und die Spannelemente so weit gegeneinander verstellt, bis der Kunststoff-Rohrabschnitt in das Kunststoff-Formstück eingeführt ist. Dabei treffen die erwärmten und plastifizierten Flächen aufeinander, die sich beim Abkühlvorgang fest miteinander verbinden.

Diese bekannte Vorrichtung ist auf den Einsatz für einen bestimmten Außendurchmesser des Kunststoff-Rohrabschnittes und den daran angepaßten Innendurchmesser des Kunststoff-Formstückes beschränkt. Bei der Verlegung von Kunststoff-Leitungsnetzen ändert sich aber der Durchmesser, so daß verschiedene darauf abgestimmte Vorrichtungen, aber unterschiedliche Heizeinrichtungen erforderlich sind.

Wird die Heizeinrichtung als Ganzes mit den Schwenkhebeln ausgewechselt, so geht sehr viel Zeit zum Umrüsten für die Schweißarbeit verloren. Dasselbe gilt auch, wenn nur das Heizelement an der Heizeinrichtung ausgetauscht wird. Dazu muß das verwendete Heizelement erst abkühlen, um umgetauscht zu werden, und das neue Heizelement muß erst aufgeheizt werden, bevor wieder mit dem Einschweißen fortgefahren werden kann. In jedem Fall sind teure Rüstzeiten in Kauf zu nehmen.

Es ist Aufgabe der Erfindung, eine Vorrichtung der eingangs erwähnten Art so zu verbessern, daß sie ohne teure Rüstzeiten zum Einschweißen von Kunststoff-Rohrabschnitten unterschiedlicher Durchmesser in die dazu passenden Kunststoff-Formstücke eingeschweißt werden können.

Diese Aufgabe wird nach der Erfindung dadurch gelöst, daß die Heizeinrichtung mehrere unterschiedliche Heizelemente mit jeweils einem topfartigen und einem zylinderförmigen Abschnitt aufweist und daß die Heizeinrichtung selbst an den Schwenkhebeln so drehbar gelagert ist, daß bei eingeschwenkter Heizeinrichtung die Heizelemente wahlweise zwischen die beiden Spannelemente mit dem eingespannten Kunststoff-Rohrabschnitt und dem eingespannten Kunststoff-Formstück eindrehbar sind.

Die Heizeinrichtung hält alle darauf angebrachten Heizelemente einsatzbereit, d.h. aufgeheizt, so daß nur das für den durchzuführenden Einschweißvorgang erforderliche Heizelement in die Arbeitsstellung an der Heizeinrichtung gebracht werden muß. Dies erfolgt durch einfache Drehbewegung der Heizeinrichtung an den Schwenkhebeln. Es muß bei eingeschwenkter Heizeinrichtung das richtige Heizelement auf die Mittelachse der Spannelemente ausgerichtet sein.

Nach einer Ausgestaltung ist vorgesehen, daß die Drehachse der Heizeinrichtung bei eingeschwenkten Schwenkhebeln vertikal über der Mittelachse der Spannelemente und damit des eingespannten Kunststoff-Rohrabschnittes und des eingespannten Kunststoff-Formstückes angeordnet ist und daß die Heizelemente mit ihren Mittelachsen auf einer Kreisbahn um die Drehachse der Heizeinrichtung angeordnet sind, deren Radius dem Abstand der Drehachse der Heizeinrichtung bei eingeschwenkter Heizeinrichtung von der Mittelachse der Spannelemente entspricht.

Das Ein- und Ausschwenken der Heizeinrichtung mit eindeutiger Ausrichtung auf die Mittelachse der Spannelemente wird dadurch ermöglicht, daß zwei Schwenkhebel an der Rückseite des Grundgestelles drehbar gelagert sind und bei eingeschwenkter Heizeinrichtung mit einem horizontalen Abschnitt zwischen die beiden Spannelemente ragen und daß die Heizeinrichtung zwischen den beiden Schwenkhebeln an den horizontalen Abschnitten der Schwenkhebel drehbar gelagert ist.

Die Stabilität der aus den beiden Schwenkhebeln und der Heizeinrichtung bestehenden Einheit wird dadurch verbessert, daß die beiden Schwenkhebel an ihren freien Enden mit einem Querträger miteinander verbunden und daß an dem Querträger ein Handhebel angebracht ist, wobei der Handhebel die Bedienung erleichtert.

Eindeutige Drehstellungen der Heizelemente werden dadurch sichergestellt, daß im Bereich eines Schwenkhebels und der Drehachse ein Stellhebel mit Rasteinrichtung oder dgl. angebracht ist, mit der die eingestellte Drehstellung der Heizeinrichtung festlegbar ist.

Die Ausrichtung und Einspannung des Kunststoff-Rohrabschnittes wird nach einer weiteren Ausgestaltung dadurch verbessert, daß der Schlitten mit dem Spannelement zum Einspannen des Kunststoff-Rohrabschnittes ein zusätzliches Spannelement trägt, das auf der der einschwenkbaren Heizeinrichtung abgekehrten Seite im Abstand zum einen Spannelement angeordnet ist.

Ein einfaches Ausführungsbeispiel ist dadurch gekennzeichnet, daß die Heizeinrichtung als rechtwinklig, gleichschenkliges Dreieck mit abgerundeten Ecken ausgebildet ist, daß auch die drei Heizelemente mit ihren Mittelachsen auf den Ecken eines rechtwinkligen, gleichschenkligen Dreiecks angeordnet sind und daß die Drehachse auf dem Mittelpunkt der Hypothenuse dieses Dreiecks liegt.

Die Erfindung wird anhand eines in den Zeichnungen dargestellten Ausführungsbeispiels näher erläutert. Es zeigt:

Fig. 1 eine Vorrichtung nach der Erfindung auf die als Bedienseite verwendete Vorderseite gesehen und

Fig. 2 eine Ansicht entlang der Linie II-II der Fig. 1.

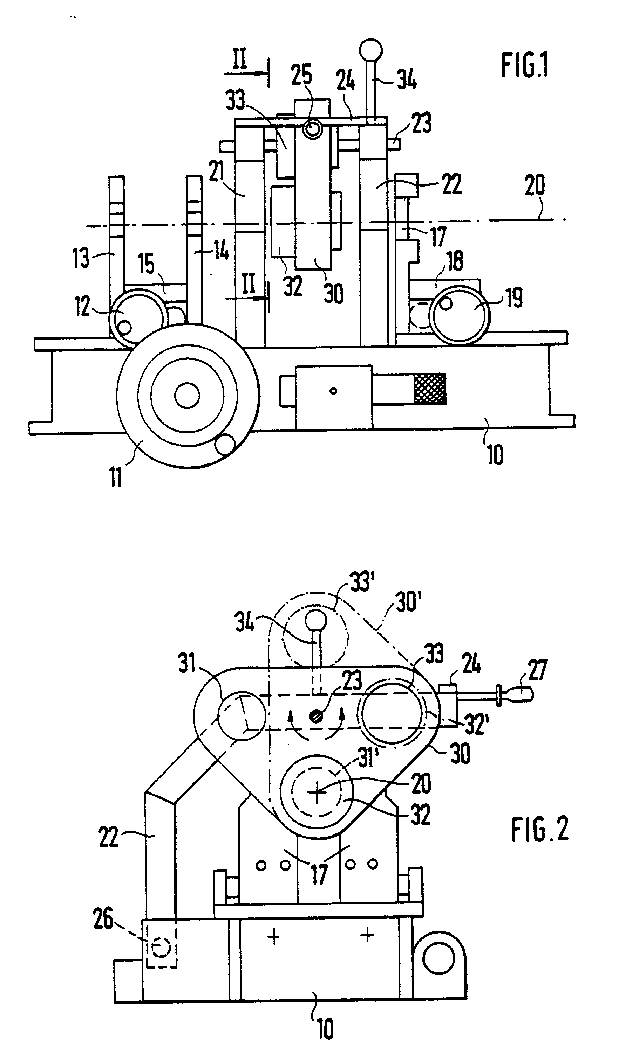

Auf dem Grundgestell 10 der Vorrichtung sind, wie die Ansicht nach Fig. 1 zeigt, die beiden Schlitten 15 und 18 gegeneinander verstellbar und wieder voneinander entfernbar. Diese Verstellung erfolgt durch Drehbewegungen in den beiden Drehrichtungen des Handrades 11. Der Schlitten 15 trägt die beiden beabstandeten Spannelemente 13 und 14 zum Einspannen des Kunststoff-Rohrschnittes. Die Spannelemente 13 und 14 werden durch das Handrad 12 verstellt. Der Schlitten 18 trägt das Spannelement 17 zum Einspannen des Kunststoff-Formstückes. Das Spannelement 17 wird durch das Handrad 19 verstellt.

Wie die Ansicht nach Fig. 2 zeigt, sind an der Rückseite des Grundgestelles 10 mittels der Schwenkachse 26 die beiden Schwenkhebel 21 und 22 drehbar gelagert. Diese Schwenkhebel 21 und 22 sind nach Art eines Auslegers ausgebildet und ragen bei eingeschwenkter, d.h. hochgeschwenkter Stellung mit horizontalen Abschnitten zwischen die Spannelemente 14 und 17 und damit den eingespannten Kunststoff-Rohrabschnitt und das eingespannte Kunststoff-Formstück. Die freien Enden der Schwenkhebel 21 und 22 sind mittels des Querträgers 24 starr miteinander verbunden. Der Querträger 24 ist mit dem Handhebel 27 verbunden, mit dem die Schwenkhebel 21 und 22 mit der daran drehbar gelagerten Heizeinrichtung 30 ein- und ausgeschwenkt werden kann.

Die Heizeinrichtung 30 trägt im Ausführungsbeispiel drei unterschiedliche Heizelemente 31, 32 und 33, die auf unterschiedliche Außendurchmesser von Kunststoff-Rohrabschnitten und den zugeordneten Innendurchmessern von Kunststoff-Formstücken abgestimmt sind. Dabei haben die Heizelemente 31, 32 und 33 dem Spannelement 14 zugekehrt einen entsprechenden topfartigen Abschnitt zum Aufstülpen auf das Ende des Kunststoff-Rohrabschnittes und dem Spannelement 17 zugekehrt einen entsprechenden zylinderförmigen Abschnitt zum Einführen in die Innenaufnahme des Kunststoff-Formstückes.

Die Drehachse 23 der Heizeinrichtung 30 liegt bei eingeschwenkter Heizeinrichtung 30 über der Mittelachse 20 der Spannelemente 13, 14 und 17 und damit des eingespannten Kunststoff-Rohrabschnittes und des eingespannten Kunststoff-Formstückes. Alle drei Heizelemente 31, 32 und 33 haben denselben Abstand von der Drehachse 23, so daß jedes Heizelement 31, 32 und 33 mit seiner Mittelachse in Deckung mit der Mittelachse 20 der Spannelemente 13, 14 und 17 gebracht werden kann und zwar durch einfaches Verdrehen der Heizeinrichtung 30 um die Drehachse 23. Wie die gestrichelt eingezeichnete Stellung der verdrehten Heizeinrichtung 30' zeigt, kommt das Heizelement 31' zur Deckung mit der Mittelachse 20, wenn in Fig. 2 die Heizeinrichtung 30 entgegen dem Uhrzeigersinn um 90° verdreht wird. Wird die Heizeinrichtung 30 dagegen im Uhrzeigersinn um 90° gedreht, dann ist das Heizelement 33 in Deckung mit der Mittelachse 20. Entscheidend ist dabei nicht die Anzahl der Heizelemente, sondern die Anordnung ihrer Mittelachsen auf einer Kreisbahn um die Drehachse 23, wobei der Radius dem Abstand entspricht, den bei eingeschwenkter Heizeinrichtung 30 die senkrecht über der Mittelachse 20 liegende Drehachse 23 von der Mittelachse 20 einnimmt.

Im Bereich des Schwenkhebels 22 und der Drehachse 23 ist der Stellhebel 25 angebracht, dem eine Rasteinrichtung oder dgl. zugeordnet ist, die die Drehstellungen der Heizeinrichtung 30 eindeutig festlegt und arretiert, so daß das jeweils eingedrehte Heizelement 31, 32 oder 33 eindeutig auf die Mittelachse 20 ausgerichtet ist. Dabei ist es von Vorteil, wenn auch zumindest die Einschwenkendstellung der Schwenkhebel 21 und 22 durch Anschläge oder dgl. eindeutig begrenzt und/oder festgelegt ist.

## Patentansprüche

1. Vorrichtung zum Einschweißen eines Kunststoff-Rohrabschnittes in ein Kunststoff-Formstück nach dem Heizelementverfahren, bei der zwei mit Spannelementen versehene Schlitten auf einem Grundgestell angeordnet und mittels einer Stelleinrichtung gegeneinander verstellbar sind und bei der mittels an dem Grundgestell schwenkbar gelagerter Schwenkhebel eine Heizeinrichtung zwischen die beiden Spannelemente mit dem eingespannten Kunststoff-Rohrabschnitt und dem eingespannten Kunststoff-Formstück ein- und ausschwenkbar ist, wobei die Heizeinrichtung ein Heizelement mit einem topfartigen Abschnitt zum Aufstülpen auf den Kunststoff-Rohrabschnitt und einen zylinderförmigen Abschnitt zum Einführen in das Kunststoff-Formstück aufweist,
dadurch gekennzeichnet,
daß die Heizeinrichtung (30) mehrere unterschiedliche Heizelemente (31,32, 33) mit jeweils einem topfartigen und einem zylinderförmigen Abschnitt aufweist und daß die Heizeinrichtung (30) selbst an den Schwenkhebeln (21,22) so drehbar gelagert ist, daß bei eingeschwenkter Heizeinrichtung (30) die Heizelemente (31,32, 33) wahlweise zwischen die beiden Spannelemente (14, 17) mit dem eingespannten Kunststoff-Rohrabschnitt und dem eingespannten Kunststoff-Formstück eindrehbar sind.

2. Vorrichtung nach Anspruch 1,
dadurch gekennzeichnet,
daß die Drehachse (23) der Heizeinrichtung (30) bei eingeschwenkten Schwenkhebeln (21,22) vertikal über der Mittelachse (20) der Spannelemente (14,17) und damit des eingespannten Kunststoff-Rohrabschnittes und des eingespannten Kunststoff-Formstückes angeordnet ist und daß die Heizelemente (31,32, 33) mit ihren Mittelachsen auf einer Kreisbahn um die Drehachse (23) der Heizeinrichtung (30) angeordnet sind, deren Radius dem Abstand der Drehachse (23) der Heizeinrichtung (30) bei eingeschwenkter Heizeinrichtung (30) von der Mittelachse (20) der Spannelemente (14,17) entspricht.

3. Vorrichtung nach Anspruch 1 oder 2,
dadurch gekennzeichnet,
daß zwei Schwenkhebel (21,22) an der Rückseite des Grundgestelles (10) drehbar gelagert sind und bei eingeschwenkter Heizeinrichtung (30) mit einem horizontalen Abschnitt zwischen die beiden Spannelemente (13,14; 17) ragen und
daß die Heizeinrichtung (30) zwischen den beiden Schwenkhebeln (21,22) an den horizontalen Abschnitten der Schwenkhebel (21,22) drehbar gelagert ist.

4. Vorrichtung nach einem der Ansprüche 1 bis 3,
dadurch gekennzeichnet,

daß die beiden Schwenkhebel (21,22) an ihren freien Enden mit einem Querträger (24) miteinander verbunden und daß an dem Querträger (24) ein Handhebel (27) angebracht ist.

5. Vorrichtung nach einem der Ansprüche 1 bis 4,
dadurch gekennzeichnet,
daß im Bereich eines Schwenkhebels (z.B. 22) und der Drehachse (23) ein Stellhebel (34) mit Rasteinrichtung oder dgl. angebracht ist, mit der die eingestellte Drehstellung der Heizeinrichtung (30) festlegbar ist.

6. Vorrichtung nach einem der Ansprüche 1 bis 5,
dadurch gekennzeichnet,
daß der Schlitten (15) mit dem Spannelement (14) zum Einspannen des Kunststoff-Rohrschnittes ein zusätzliches Spannelement (13) trägt, das auf der der einschwenkbaren Heizeinrichtung (30) abgekehrten Seite im Abstand zum einen Spannelement (14) angeordnet ist.

7. Vorrichtung nach einem der Ansprüche 1 bis 6,
dadurch gekennzeichnet,
daß die Heizeinrichtung (30) als rechtwinklig gleichschenkliges Dreieck mit abgerundeten Ecken ausgebildet ist,
daß auch die drei Heizelemente (31,32, 33) mit ihren Mittelachsen auf den Ecken eines rechtwinklingen, gleichschenkligen Dreiecks angeordnet sind und daß die Drehachse (23) auf dem Mittelpunkt der Hypothenuse dieses Dreiecks liegt.

FIG.1

FIG.2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | GB-A-8 469 55 (AB SVENSKA METALLVER-KEN)September 1960 <br> * Seite 1, Zeile 10 - Zeile 13 * * Seite 2, Zeile 45 - Zeile 62 @ Seite 3, Zeile 128 - Seite 4, Zeile 18; Abbildung 1 * <br> – – – | 1-4,7 | B 29 C 65/20 |
| D,A | DE-B-2 734 911 (WIDOS DOMMER SÖHNE GMBH)Juli 1979 <br> * Spalte 2, Zeile 28 - Zeile 65; Ansprüche; Abbildung * <br> – – – | 1-7 | |
| A | DE-A-2 332 174 (DOMMER SÖHNE GMBH)1975 <br> – – – | | |
| A | EP-A-0 327 265 (DRG (UK)) <br> – – – – – | | |
| | | | RECHERCHIERTE SACHGEBIETE (Int. Cl.5) |
| | | | B 29 C |

Der vorliegende Recherchenbericht wurde für alle Patentansprüche erstellt

| Recherchenort | Abschlußdatum der Recherche | Prüfer |
|---|---|---|
| Den Haag | 08 Juli 91 | SOEDERBERG J.-E. |